# EUROPEAN PATENT SPECIFICATION

(11) **EP 4 039 441 B1**
(45) Date of publication and mention of the grant of the patent: **19.02.2025**
(21) Application number: 20871222.4
(22) Date of filing: 20.07.2020
(51) Int. Cl.: B29C 45/17, B29C 45/26, B29C 45/76, B29C 45/77

(54) **PRESSURE DETECTION DEVICE AND QUALITY DETERMINATION METHOD**
DRUCKERFASSUNGSVORRICHTUNG UND QUALITÄTSBESTIMMUNGSVERFAHREN
DISPOSITIF DE DÉTECTION DE PRESSION ET PROCÉDÉ DE DÉTERMINATION DE QUALITÉ

(30) Priority: 02.10.2019 JP 2019182145
(43) Date of publication of application: 10.08.2022
(73) Proprietor: Minebea Mitsumi Inc., Kitasaku-gun, Nagano 3890293 (JP)
(72) Inventor: TAKAYAMA Yoshimasa, Kitasaku-gun, Nagano 389-0293 (JP); KOBAYASHI Kota, Kitasaku-gun, Nagano 389-0293 (JP)
(74) Representative: Dennemeyer & Associates S.A.
(86) International application number: PCT/JP2020/028004
(87) International publication number: WO 2021/065159

(56) References cited:
- WO-A1-2018/105227
- CN-A- 109 501 185
- JP-A- 2009 286 052
- JP-A- 2015 231 676
- JP-A- 2018 015 936
- JP-A- 2018 183 994
- JP-A- 2020 108 947
- US-A- 6 090 318
- US-B1- 6 514 440

## Description

### Technical Field

The present invention relates to a pressure detection apparatus and a method for detecting the inner pressure of a cavity of a metal mold of an injection molding machine, and determining the quality of a product molded with the metal mold.

### Background Art

Conventionally, a pressure detection apparatus for detecting the inner pressure of a cavity of a metal mold during injection molding is mounted at an injection molding machine in some cases, and the detected value of the inner pressure is used for determining the quality of a molded product.

In addition, in the case of performing so-called "multi-cavity molding" for simultaneously molding a plurality of products with a metal mold, balanced compression molding of the cavities may produce more desirable results. Patent Document 1 discloses a method for maintaining the inner pressure of each cavity at a constant pressure and thus achieving the same quality as a quality in a case of performing molding with a single cavity.

Patent Document 2 discloses a method for an injection moulding machine with multiple cavities where the temperature is adjusted depending on the relative time difference it takes each mold to reach a preset reference pressure which is lower than the lowest maximum pressure.

Patent Document 3 focuses on single cavity molding machines and discloses the monitoring of the pressure development inside the cavity to ensure that the process stays within determined operating limits. For example pressure values of peak pressure, pack pressure, average pressure and and area under the pressure curve can be monitored.

Patent Document 4 discloses the monitoring of the time window inwhich a rising pressure threshold value and a falling pressure threshold value is reached. The disclosed threshold values are below the peak pressure values.

### Citation List

### Patent Literature

Patent Document 1: JP 2009-286052 A
Patent Document 2: US 6 090 318 A
Patent Document 3 : US 6 514 440 B1
Patent Document 4 : JP 2018 015936 A

### Summary of Invention

### Technical Problem

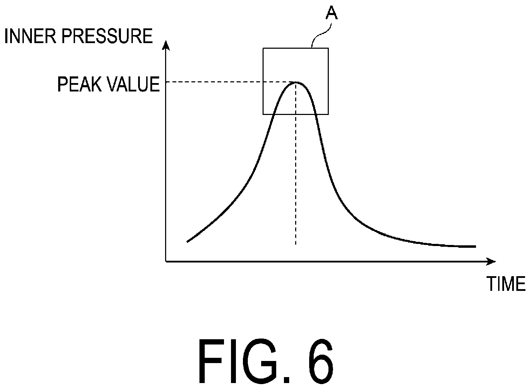

A conventional method for determining the quality of a molded product on the basis of the detected inner pressure will be described below with reference to FIG. 6.

FIG. 6 is a graph illustrating an inner pressure waveform of one cavity detected by a pressure sensor in a single injection molding step.

In the graph illustrated in FIG. 6, the horizontal axis indicates time, the vertical axis indicates a detected value of an inner pressure of a cavity, the inner pressure increases as the heated resin material is injected and poured into the cavity after the metal mold is closed and the injection molding step is started, and the inner pressure of the cavity is maximized to a peak value at or around a time when the resin material is distributed in the whole cavity. Thereafter, the inner pressure of the cavity is reduced as the resin material is cooled, the metal mold is opened, and the inner pressure becomes the atmospheric pressure. When the peak value of the inner pressure is within a predetermined range A, the product is determined to be good.

It is necessary to set the predetermined range A to a relatively wide range. The reason is that the peak value of the inner pressure gradually changes due to dirt accumulating at each part in the metal mold as the number of shots increases. In addition, the peak value of the inner pressure changes depending on various factors such as the weather (air temperature, air pressure, and humidity), the lot of material pellets, the moisture absorption condition of the material, and the like. As such, even when the peak value of the inner pressure changes due to the above-mentioned factors, the product is determined to have constant quality and be good when the peak value of the inner pressure is within the predetermined range A.

In a metal mold including a plurality of cavities, the variation of the peak value of the inner pressure normally tends to be the same for all cavities.

However, the present inventors have found that even when all peak values of the inner pressures of a plurality of cavities are within the predetermined range A, the peak value of the inner pressure of a certain cavity tends to be different from the peak values of the inner pressures of the other cavities. In this case, the products molded with the cavities with the different peak values can have potential defects while these products are determined to be good under the conventional criteria.

Thus, an object of the present invention is to solve the above-described problems, and improve the quality of a molded product by introducing quality determination criteria with higher accuracy in addition to the criteria for determining the product to be good conventionally.

### Solution to Problem

A pressure detection apparatus of the present invention includes:
a plurality of pressure sensors detecting respective inner pressures of a plurality of cavities of a metal mold of an injection molding machine; and
an information processing apparatus receiving the detected inner pressures, and determine quality of a product molded with each cavity based on a value related to variation of a peak pressure arrival time.

Preferably, the value related to the variation is an absolute value of a difference between peak pressure arrival times at an nth shot.

Preferably, the quality of the product is determined with a peak pressure arrival time at a first shot taken into consideration as an offset.

Preferably, the quality of the product is determined based on an absolute value of a difference between peak values of inner pressures at an nth shot.

In the present invention, a method of determining quality of a product molded with a metal mold of an injection molding machine includes:
receiving inner pressures of a plurality of cavities of the metal mold of the injection molding machine, the inner pressures being detected by a plurality of pressure sensors;
calculating a value related to variation of a peak pressure arrival time;
comparing the value related to the variation with a predetermined threshold value; and
determining quality of a product.

### Brief Description of Drawings

FIG. 1 is a side view illustrating an overall configuration of an injection molding machine connected with a pressure detection apparatus according to an embodiment of the present invention.
FIG. 2 is a sectional view illustrating a configuration of a metal mold of the injection molding machine.
FIG. 3 is a block diagram illustrating a configuration of an amplifier of the pressure detection apparatus according to the embodiment of the present invention.
FIG. 4 is a graph illustrating inner pressure waveforms of a plurality of cavities in a single injection molding step.
FIG. 5 is another graph illustrating inner pressure waveforms of a plurality of cavities in a single injection molding step.
FIG. 6 is a graph illustrating an inner pressure waveform of one cavity in a single injection molding step.

### Description of Embodiments

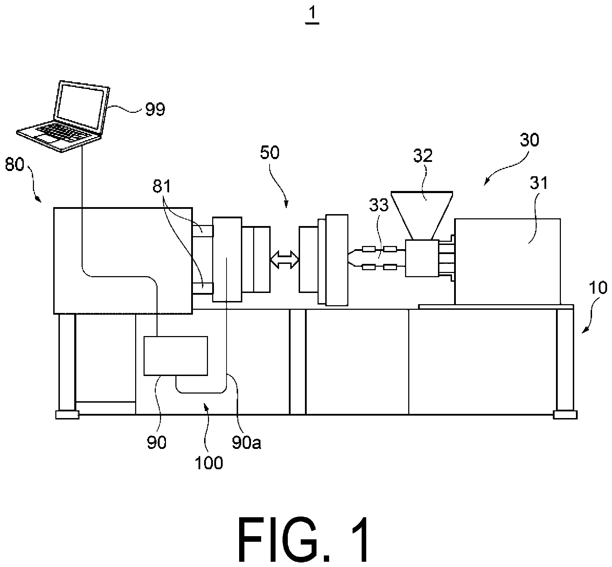

FIG. 1 is a side view illustrating an overall configuration of an injection molding machine connected with a pressure detection apparatus according to an embodiment of the present invention.

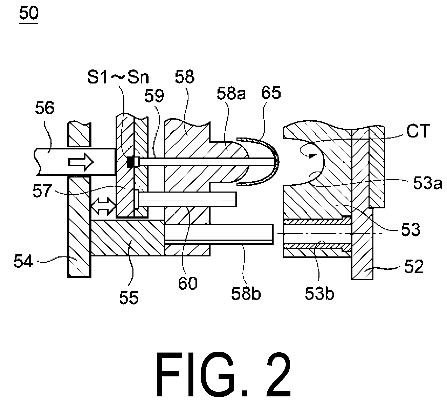

An injection molding machine 1 includes a mold clamping unit 80, a metal mold 50, and an injection unit 30 supported in a state of being placed on a bed 10. A pressure detection apparatus 100 including pressure sensors S1 to Sn (FIG. 2) and an amplifier 90 is connected to the injection molding machine 1.

The injection unit 30 includes a driving unit 31 using a hydraulic motor, a hopper 32, a cylinder 33 and the like. The injection unit 30 heats a material supplied from the hopper 32 using the cylinder 33 and drives the cylinder 33 using the driving unit 31, so that the injection unit 30 injects the material having been heated (hereinafter also referred to as "heated material") into a cavity CT (FIG. 2) of the metal mold 50 from a front end nozzle (not illustrated) of the cylinder 33 and fills the cavity CT with the heated material. Note that the use of the hydraulic motor for the injection unit 30 is an example, and an electric motor may be used instead of the hydraulic motor. The following description also similarly applies to this case.

At the metal mold 50, the heated material injected from the cylinder 33 of the injection unit 30 is molded at the cavity CT and is then ejected.

The mold clamping unit 80 is a toggle type or direct pressure type mechanism unit for applying pressure for opening and closing the metal mold 50, and maintaining the closed state of the metal mold 50 against the pressure of the heated material when the cavity CT is filled, for example.

FIG. 2 is a sectional view illustrating a configuration of a metal mold of the injection molding machine.

In the metal mold 50, a fixing side metal mold 53 is attached to a fixing side attaching plate 52, and a movable side metal mold 58 is attached to a movable side attaching plate 54 through a spacer block 55.

In the fixing side metal mold 53, a curved recess part 53a for forming the cavity CT between the fixing side metal mold 53 and the movable side metal mold 58 is formed, and a guide hole 53b is formed. In the movable side metal mold 58, a protrusion part 58a for forming the cavity CT between the movable side metal mold 58 and the fixing side metal mold 53 is formed, and a guide pin 58b is provided at a position opposing the guide hole 53b of the fixing side metal mold 53.

At a center part of the movable side metal mold 58 and at a position of a center of the cavity CT, an ejector pin 59 is supported in a longitudinally movable manner with the ejector pin 59 extending through the center of the protrusion part 58a.

The front end part of the ejector pin 59 ejects a product 65 molded to match the shape of the cavity CT by contacting the product 65. The rear end part of the ejector pin 59 is integrally attached to an ejector plate 57.

At the metal mold 50, a plurality of the cavities CT are formed between the fixing side metal mold 53 and the movable side metal mold 58, and the pressure sensors S1 to Sn are integrally attached to the end surfaces of the rear end parts of the ejector pins 59 corresponding to the respective cavities CT. Specifically, the pressure sensors S1 to Sn are provided to correspond to the respective n cavities CT.

For example, strain gages are used for the pressure sensors S1 to Sn, and the inner pressures of the cavities CT act on the pressure sensors S1 to Sn through the ejector pins 59. In this manner, the pressure sensors S1 to Sn can detect the inner pressures of the cavities CT (in this case, the filling pressures of the heated materials filled into the cavities CT by the injection unit 30).

At the ejector plate 57, an ejector rod 56 is attached at the movable side attaching plate 54 side, and a return pin 60 is attached at the movable side metal mold 58 side. The ejector rod 56 is attached to the ejector plate 57 with the ejector rod 56 extending through the movable side attaching plate 54. A not-illustrated spring for returning the ejector plate 57 to the original position is attached to the return pin 60.

The mold clamping unit 80 (FIG. 1) includes a hydraulic cylinder inside the housing of the mold clamping unit 80, and four tie bars 81 coupling the four corners of the housing and the four corners of the fixing side attaching plate 52 and the movable side attaching plate 54. The ejector rod 56 of the metal mold 50 is coupled to the hydraulic cylinder of the mold clamping unit 80.

The amplifier 90 is connected to the pressure sensors S1 to Sn through a connection code 90a so as to receive the inner pressures of the cavities CT detected by the pressure sensors S1 to Sn. In addition, the amplifier 90 is also connected to a personal computer 99. The amplifier 90 is disposed inside or outside the bed 10 in consideration of the connectivity with the pressure sensors S1 to Sn using the connection code 90a.

Note that connection between the amplifier 90 and the pressure sensors S1 to Sn and between the amplifier 90 and the personal computer 99 is not limited to wired connection, and may be wireless connection using a method such as short-range wireless communication.

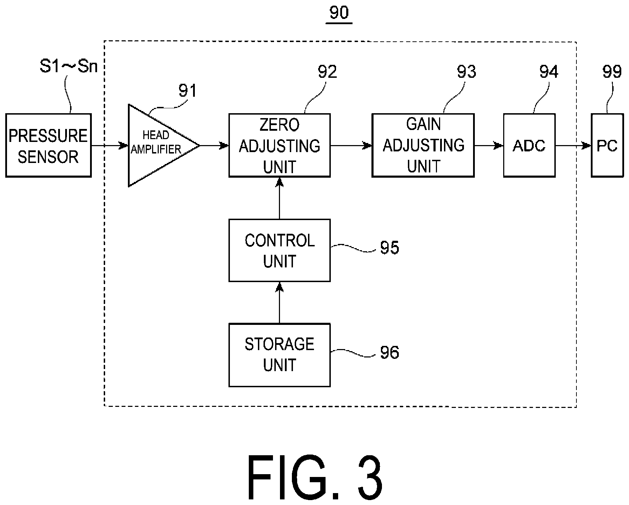

FIG. 3 is a block diagram illustrating a configuration of an amplifier of the pressure detection apparatus according to the embodiment of the present invention.

The amplifier 90 is configured as an information processing apparatus, and includes a head amplifier 91, a zero adjusting unit 92, a gain adjusting unit 93, an analog digital conversion unit (ADC) 94, a control unit 95 and a storage unit 96.

The head amplifier 91 amplifies the output values of the pressure sensors S1 to Sn. The zero adjusting unit 92 adjusts the output values of the pressure sensors S1 to Sn to accurate output values with respect to the zero point by using respective pieces of calibration information. The gain adjusting unit 93 amplifies the output values of the pressure sensors S1 to Sn.

The analog digital conversion unit 94 converts the output values (analog signals) of the pressure sensors S1 to Sn into digital pressure detection data, and outputs the data to the personal computer (PC) 99. The control unit 95 is composed of a microcomputer configuration including a CPU, a memory and the like, and centrally controls each unit of the amplifier 90. The storage unit 96 stores the output values of the pressure sensors S1 to Sn, and the stored information is read by the control unit 95.

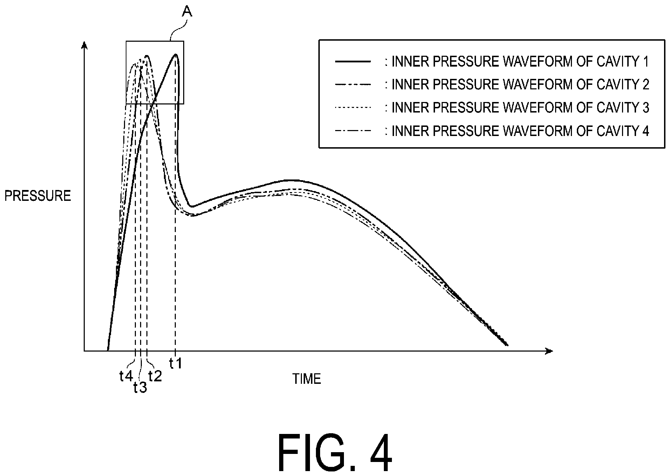

FIG. 4 is a graph illustrating inner pressure waveforms of cavities at the nth shot in an injection molding machine including four cavities with the same shape. The horizontal axis indicates time and the vertical axis indicates pressure. Note that n is a natural number.

Even with the four cavities with the same shape symmetrically disposed at the injection molding machine, the inner pressure waveforms are different from each other to a certain degree. It should be noted that, since the peak pressure arrival times (the times to arrive at the peak values of the inner pressures) t1 to t4 fall within a predetermined range A, all of the four molded products are determined to be good under the conventional criteria.

However, the peak pressure arrival time t1 of a cavity 1 is separated from the peak pressure arrival times t2 to t4 of cavities 2 to 4, and there may be some defects at the cavity 1.

Thus, in the present invention, the quality of the product molded with each cavity is determined on the basis of the value related to the variation of the peak pressure arrival times of a plurality of cavities.

For example, the value related to the variation is an absolute value of the difference between peak pressure arrival times at the nth shot, |t1 - t2|, |t1 - t3|, |t1 - t4|, |t2 - t3|, |t2 - t4| and |t3 - t4| are calculated by using the amplifier 90 as an information processing apparatus and compared with a predetermined threshold value, and the products are determined to be defective when the values are greater than the predetermined threshold value.

In the case of FIG. 4, the absolute values of the differences between peak pressure arrival times are |t2 - t3| ≈ |t3 - t4| < |t2 - t4| < |t1 - t2| < |t1 - t3| < |t1 - t4|. Here, when a predetermined threshold value tT is set and tT < |t1 - t2| < |t1 - t3| < |t1 - t4| holds, it can be determined that some defect is caused at the cavity 1.

One possible reason that the peak pressure arrival time of only one cavity is different among a plurality of cavities is that the fluidity of the heated material filled into the cavity is high or low.

For example, when the temperature of a resin injection path to a certain cavity is lower than the temperatures of resin injection paths to other cavities, or when there is a deposit such as dirt in the metal mold, the fluidity of the heated material is low and the peak pressure arrival time of the cavity is also small.

As described above, also when the weather or the lot of the material pellet is changed, the peak pressure arrival time changes, but in this case, there is no problem (that is, the products are determined to be good) because the peak pressure arrival times of a plurality of cavities change in the same manner. On the other hand, when the peak pressure arrival time of only one cavity is different among a plurality of cavities, the product can be determined to be defective in the present invention.

In this manner, the present invention can improve the quality of the molded product by introducing the quality determination criteria with higher accuracy in addition to the conventional criteria (the predetermined range A in FIG. 4) for determining the product to be good.

Note that as illustrated in FIG. 4, when it is determined that some defect is caused at the cavity 1 at the nth shot, it is possible to determine that only the product molded with the cavity 1 is defective, or that all products molded with the cavities 1 to 4 at the nth shot are defective.

As another example, the values related to the variation may be the absolute values of differences between average values of the peak pressure arrival times of all of (1 to n) shots.

For example, average values t1_ave to t4_ave of the peak pressure arrival times of all shots of the cavities 1 to 4 are obtained by using the amplifier 90 as an information processing apparatus, absolute values of the differences between the average values of the peak pressure arrival times, |t1_ave - t2_ave|, |t1_ave - t3_ave|, |t1_ave - t4_ave|, |t2_ave - t3_ave|, |t2_ave - t4_ave| and |t3_ave - t4_ave| are calculated and compared with a predetermined threshold value, and the products are determined to be defective when the values are greater than the predetermined threshold value.

In this manner, even with the injection molding with a peak arrival time of each shot tending to vary each time, the quality of the product can be appropriately determined.

At the first shot, ideally, the inner pressure waveforms of the four cavities with the same shape symmetrically disposed at the injection molding machine match each other. However, in practice, the four inner pressure waveforms may not match each other in some situation due to manufacturing errors of a metal mold, variation of the performance of four heaters for heating the metal mold, and the like. By taking into account such initial differences, the accuracy of the determination of the quality can be increased.

For example, it is assumed that at the first shot, only the peak pressure arrival time t4_1 of the cavity 4 is small, that the peak pressure arrival times t1_1 to t3_1 of the cavities 1 to 3 match each other, and that a difference is Δt (= t1_1 - t4_1).

In FIG. 4 illustrating the nth shot, the peak pressure arrival time t4 of the cavity 4 is smaller than the peak pressure arrival times t2 and t3 of the cavities 2 and 3, and t4 < t3 < t2 holds. When the difference Δt is considered as an offset, the peak pressure arrival time of the cavity 4 is (t4 + Δt). Here, when t3 < t4 + Δt < t2 holds, the cavities 2 to 4 can be determined to have substantially the same peak pressure arrival times.

As such, the variation of the peak pressure arrival times t1_1 to t4_1 of the cavities 1 to 4 at the first shot is the inherent characteristics of the cavities 1 to 4, and the quality of the product is determined with the inherent characteristics taken into consideration as the offset at the time of determining the variation of the peak pressure arrival times t1_n to t4_n of the cavities 1 to 4 at the nth shot. Thus, it is possible to avoid erroneous determination of determining that the product to be determined to be good is defective.

As another example, the difference between the peak pressure arrival time at the first shot and the peak pressure arrival time at the nth shot of each cavity may be used.

For example, it is assumed that the peak pressure arrival times of the cavities 1 to 4 are t1_1 to t4_1 respectively at the first shot, and the peak pressure arrival times of the cavities 1 to 4 are t1_n to t4_n respectively at the nth shot.

Here, when t2_1 - t2_n ≈ t3_1 - t3_n ≈ t4_1 - t4_n = Δt and are approximately equal, whereas t1_1 - t1_n = Δt' > Δt, it is conceivable that some defects may have occurred at the cavity 1 at the nth shot.

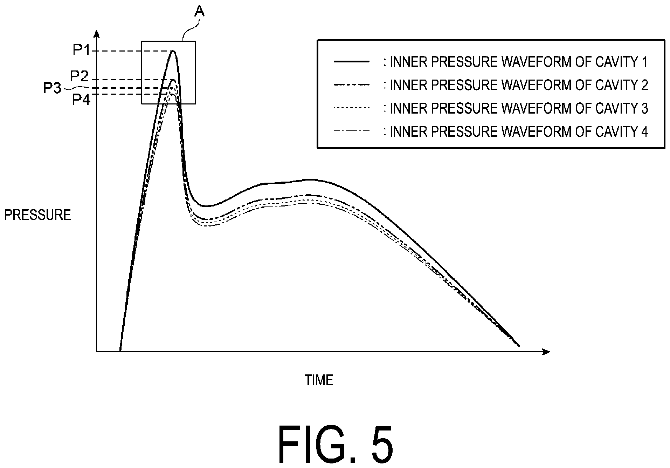

FIG. 5 is another graph illustrating inner pressure waveforms of cavities at the nth shot in an injection molding machine including four cavities with the same shape. The horizontal axis indicates time and the vertical axis indicates pressure. While the peak pressure arrival time is focused in FIG. 4, the peak value of the inner pressure is focused in FIG. 5.

While all peak values P1 to P4 of the inner pressures of the four cavities are within the predetermined range A, the peak value P1 of the inner pressure of the cavity 1 is separated from the peak values P2 to P4 of the inner pressures of the cavities 2 to 4, and therefore there may be some defects at the cavity 1.

Thus, as in the case of the peak pressure arrival time, the absolute values of the differences between the peak values of the inner pressures at the nth shot are calculated by using the amplifier 90 as an information processing apparatus and compared with a predetermined threshold value, and the products are determined to be defective when the values are greater than the predetermined threshold value.

The absolute values of the differences between the peak values of the inner pressures are |P2 - P3| ≈ |P3 - P4| < |P2 - P4| < |P1 - P2| < |P1 - P3| < |P1 - P4|. Here, when a predetermined threshold value PT is set and PT < |P1 - P2| < |P1 - P3| < |P1 - P4| holds, it can be determined that some defect is caused at the cavity 1.

In FIG. 5, the variation of the peak value of the inner pressure is relatively large while the variation of the peak pressure arrival time is small. In this manner, defects incapable of being detected when attention is paid to only the variation of the peak pressure arrival time can be detected when attention is paid to the peak value of the inner pressure, and thus the accuracy of the determination of the quality can be increased.

When the product is determined to be defective on the basis of at least one of the value related to the variation of the peak pressure arrival time and the value related to the variation of the peak value of the inner pressure at the nth shot, and defects continuously occur also at (n + 1)th and (n + 2)th shots, the possibility of the potential cause of defects can be determined such as determination that cleaning of the metal mold should be performed at a timing earlier than the original timing and the like, for example.

On the other hand, the injection molding may be continuously performed when the product is determined to be defective on the basis of at least one of the value related to the variation of the peak pressure arrival time and the value related to the variation of the peak value of the inner pressure at the nth shot, but the product can be determined to be not defective at (n + 1)th and (n + 2)th shots.

The present invention is not limited to the above-described embodiment.

For example, while the injection molding machine includes the symmetrically disposed four cavities with the same shape in the above-described embodiment, it suffices that two or more cavities are provided, and the cavities need not necessarily have the same shape. When the plurality of cavities have different shapes, the present invention can be applied in the same manner by taking into account the above-described offset.

In addition, while the inner pressure of the cavity is indirectly detected by using the pressure sensor fixed at the ejector pin in the above-described embodiment, the inner pressure of the cavity directly can be detected by using a pressure sensor fixed at a runner in or near the cavity.

In addition, while the value related to the variation is the absolute value of the difference between the peak pressure arrival times or the peak values of the inner pressures in the above-described embodiment, the value may be a dispersion or a standard deviation of the peak pressure arrival times or the peak values of the inner pressures. Note that when the dispersion or the standard deviation is used, it is unknown which of the plurality of cavities causes a defect, and thus all of the plurality of products molded at the nth shot having the dispersion or standard deviation greater than a predetermined value has to be determined to be defective.

In addition, while the amplifier is used as an information processing apparatus and the amplifier calculates the value related to the variation of the peak pressure arrival time, compares the value related to the variation with the predetermined threshold value, and determines the quality of the product in the above-described embodiment, these processes may be performed by a personal computer and the like.

### Reference Signs List

- 1: Injection molding machine
- 10: Bed
- 30: Injection unit
- 31: Driving unit
- 32: Hopper
- 33: Cylinder
- 50: Metal mold
- 52: Fixing side attaching plate
- 53: Fixing side metal mold
- 53a: Recess part
- 53b: Guide hole
- 54: Movable side attaching plate
- 55: Spacer block
- 56: Ejector rod
- 57: Ejector plate
- 58: Movable side metal mold
- 58a: Protrusion part
- 58b: Guide pin
- 59: Ejector pin
- 60: Return pin
- 65: Product
- 80: Mold clamping unit
- 81: Tie bar
- 90: Amplifier (Information processing apparatus)
- 90a: Connection code
- 91: Head amplifier
- 92: Zero adjusting unit
- 93: Gain adjusting unit
- 94: Analog digital conversion unit
- 95: Control unit
- 96: Storage unit
- 99: Personal computer
- 100: Pressure detection apparatus
- CT: Cavity
- S1 to Sn: Pressure sensor

## Claims

1. A pressure detection apparatus comprising:
a plurality of pressure sensors (S 1 to Sn) configured to detect respective inner pressures of a plurality of cavities (CT) of a metal mold (50) of an injection molding machine (1); wherein
an information processing apparatus is configured to receive the detected inner pressures, and determine quality of a product molded with each cavity (CT) based on a value related to variation of a peak pressure arrival time (t1, t2, t3, t4).

2. The pressure detection apparatus according to claim 1, wherein the value related to the variation is an absolute value of a difference between peak pressure arrival times (|t1 - t2|, |t1 - t3|, |t1 - t4|, |t2 - t3|, |t2 - t4|, |t3 - t4|) at an nth shot.

3. The pressure detection apparatus according to claim 1 or 2, wherein the quality of the product is determined with a peak pressure arrival time at a first shot taken into consideration as an offset.

4. The pressure detection apparatus according to any one of claims 1 to 3, wherein the quality of the product is determined based on an absolute value of a difference between peak values of inner pressures at an nth shot.

5. A method of determining quality of a product molded with a metal mold (50) of an injection molding machine (1), the method comprising:
receiving inner pressures of a plurality of cavities (CT) of the metal mold (50) of the injection molding machine (1), the inner pressures being detected by a plurality of pressure sensors (S1 to Sn); **characterized in that**
a value related to variation of a peak pressure arrival time is calculated;
the value related to the variation is compared with a predetermined threshold value(tT); and
the quality of a product is determined.

## Patentansprüche

1. Druckerkennungseinrichtung, umfassend:
eine Vielzahl von Drucksensoren (S1 bis Sn), die dazu konfiguriert sind, jeweilige Innendrücke einer Vielzahl von Hohlräumen (CT) einer Metallform (50) einer Spritzgießmaschine (1) zu erkennen; wobei eine Informationsverarbeitungseinrichtung dazu konfiguriert ist, die erkannten Innendrücke zu empfangen und die Qualität eines Produkts, das mit jedem Hohlraum (CT) geformt wird, basierend auf einem Wert, der auf die Variation einer Spitzendruckankunftszeit (t1, t2, t3, t4) bezogen ist, zu bestimmen.

2. Druckerkennungseinrichtung nach Anspruch 1, wobei der auf die Variante bezogene Wert ein Absolutwert einer Differenz zwischen Spitzendruckankunftszeiten (|t1 - t2|, |t1 - t3|, |t1 - t4|, |t2 - t3|, |t2 - t4|, |t3 - t4|) bei einem n-ten Schuss ist.

3. Druckerkennungseinrichtung nach Anspruch 1 oder 2, wobei die Qualität des Produkts mit einer Spitzendruckankunftszeit bei einem ersten Schuss bestimmt wird, die als Versatz berücksichtigt wird.

4. Druckerkennungseinrichtung nach einem der Ansprüche 1 bis 3, wobei die Qualität des Produkts basierend auf einem absoluten Wert einer Differenz zwischen Spitzenwerten von Innendrücken bei einem n-ten Schuss bestimmt wird.

5. Verfahren zum Bestimmen der Qualität eines Produkts, das mit einer Metallform (50) einer Spritzgießmaschine (1) geformt wird, wobei das Verfahren umfasst:
Empfangen von Innendrücken einer Vielzahl von Hohlräumen (CT) der Metallform (50) der Spritzgießmaschine (1), wobei die Innendrücke durch eine Vielzahl von Drucksensoren (S1 bis Sn) erkannt werden; **dadurch gekennzeichnet, dass**
ein Wert, der auf die Variante einer Spitzendruckankunftszeit bezogen ist, berechnet wird;
der Wert, der auf die Variante bezogen ist, mit einem vorgegebenen Schwellenwert (tT) verglichen wird; und
die Qualität eines Produkts bestimmt wird.

## Revendications

1. Appareil de détection de pression comprenant :
une pluralité de capteurs de pression (S1 à Sn) configurés pour détecter les pressions internes respectives d'une pluralité de cavités (CT) d'un moule métallique (50) d'une machine de moulage par injection (1) ; dans lequel un appareil de traitement d'informations est configuré pour recevoir les pressions internes détectées, et déterminer la qualité d'un produit moulé avec chaque cavité (CT) sur la base d'une valeur liée à la variation d'un temps d'arrivée d'un pic de pression (t1, t2, t3, t4).

2. Appareil de détection de pression selon la revendication 1, dans lequel la valeur liée à la variation est une valeur absolue de la différence entre les temps d'arrivée du pic de pression (|t1 - t2|, |t1 - t3|, |t1 -t4|, |t2 -t31, |t2 -t4|, |t3 -t4|) lors d'un n-ième tir.

3. Appareil de détection de pression selon la revendication 1 ou 2, dans lequel la qualité du produit est déterminée en tenant compte d'un temps d'arrivée du pic de pression lors d'un premier tir pris en compte comme décalage.

4. Appareil de détection de pression selon l'une quelconque des revendications 1 à 3, dans lequel la qualité du produit est déterminée sur la base d'une valeur absolue de la différence entre les valeurs de pic de pressions internes lors d'un n-ième tir.

5. Procédé de détermination de la qualité d'un produit moulé avec un moule métallique (50) d'une machine de moulage par injection (1), le procédé comprenant :
la réception des pressions internes d'une pluralité de cavités (CT) du moule métallique (50) de la machine de moulage par injection (1), les pressions internes étant détectées par une pluralité de capteurs de pression (S1 à Sn) ; **caractérisé en ce que**
une valeur liée à la variation d'un temps d'arrivée du pic de pression est calculée ;
la valeur liée à la variation est comparée à une valeur seuil prédéterminée (tT) ; et
la qualité d'un produit est déterminée.
